# EUROPÄISCHE PATENTSCHRIFT

(11) **EP 1 668 516 B1**
(45) Veröffentlichungstag und Bekanntmachung des Hinweises auf die Patenterteilung: **15.06.2011**
(21) Anmeldenummer: 04764260.8
(22) Anmeldetag: 18.08.2004
(51) Int. Cl.: G06F 12/14

(54) **ENTSCHLÜSSELUNG UND VERSCHLÜSSELUNG BEI SCHREIBZUGRIFFEN AUF EINEN SPEICHER**
DECRYPTING AND ENCRYPTING DURING WRITE ACCESSES TO A MEMORY
DECODAGE ET CODAGE LORS D'ACCES EN ECRITURE A UNE MEMOIRE

(30) Priorität: 30.09.2003 DE 10345385
(43) Veröffentlichungstag der Anmeldung: 14.06.2006
(73) Patentinhaber: Infineon Technologies AG, 85579 Neubiberg (DE)
(72) Erfinder: MEYER, Bernd, 81739 München (DE); GÖTTFERT, Rainer, 82024 Taufkirchen (DE); HESS, Erwin, 85521 Ottobrunn (DE); SONNEKALB, Steffen, 82024 Taufkirchen (DE)
(74) Vertreter: Schenk, Markus
(86) Internationale Anmeldenummer: PCT/EP2004/009274
(87) Internationale Veröffentlichungsnummer: WO 2005/036406

(56) Entgegenhaltungen:
- US-B1- 6 345 359

## Beschreibung

Die vorliegende Erfindung bezieht sich auf die Entschlüsselung und Verschlüsselung bei Schreibzugriffen auf einen Speicher, wie sie beispielsweise zur Sicherung von Daten bei Chipkarten oder Smartcards verwendet wird.

Zum Schutz gegen unberechtigtes Ausspähen von gespeicherten Informationen werden in verschiedenen Anwendungen die Speicherinhalte des Speichers verschlüsselt. Im Bereich des bargeldlosen Zahlungsverkehrs beispielsweise werden auf Chipkarten gespeicherte Geldbeträge verschlüsselt gespeichert, um sie vor unberechtigtem Ausspähen zu schützen, oder vor Manipulationen, wie z.B. unberechtigten Betragsveränderungen.

An den Klartext, der den in einem Speicher gespeicherten verschlüsselten Informationen zugrundeliegt, gelangt ein Unberechtigter beispielsweise durch statistische Analyse des auf dem Speicher gespeicherten Chiffrats. Diese statistische Analyse umfasst beispielsweise eine Analyse der Auftretenswahrscheinlichkeit bestimmter Chiffrat-Datenblöcke oder dergleichen. Um diese statistische Analyse zu erschweren, ist es wünschenswert, dass gleiche Klartexte, die sich in verschlüsselter Form an unterschiedlichen Speicherpositionen des Speichers befinden, dort nicht in Form identischer Chiffrattexte vorliegen.

Eine Möglichkeit, die Verschlüsselung von Klartexten an unterschiedlichen Speicherpositionen in unterschiedliche Chiffretexte sicherzustellen, besteht darin, zur Verschlüsselung das sogenannte Cipher-Block-Chaining-Verfahren zu verwenden, d.h. das Betreiben einer Blockchiffre im CBC-Modus, wie er beispielsweise im Handbook of Applied Cryptography, CRC Press, NY, 1997, S. 230, beschrieben ist. Im CBC-Modus wird zur Verschlüsselung eines Klartext-Datenblocks immer das Chiffrat des vorhergehenden Klartext-Datenblocks herangezogen, wie z.B. des Klartext-Datenblocks mit um 1 niedrigerer oder um 1 höherer Adresse in dem Speicher. Der CBC-Modus hat den Nachteil, dass ein einzelnes isoliertes Datum in dem Speicher nur entschlüsselt werden kann, wenn die gesamte oder zumindest ein Teil der Kette der sequentiellen Daten entschlüsselt wird. Folglich ist kein direkter Zugriff auf Daten innerhalb der CBC-Kette möglich. Das Durchgehen der Chiffre-Kette kostet wiederum kostbare Rechenzeit und verbraucht unnötig viel Strom, was insbesondere bei Smartcards von Nachteil ist, die in batteriebetriebenen Geräten verwendet werden, wie z.B. Handys, oder bei Chipkarten, bei denen die Kunden der Chipkartenherausgeber möglichst kurze Transaktionszeiten an den Terminals verlangen.

Eine weitere Möglichkeit, sicherzustellen, dass gleiche Klartexte, die sich auf unterschiedlichen Speicherpositionen befinden, in unterschiedliche Chiffretexte verschlüsselt werden, besteht in der Generierung adressabhängiger Schlüssel zur Verschlüsselung der Klartexte. Die Verwendung adressabhängiger Schlüssel macht sich den Umstand zunutze, dass einem zu speichernden, zu verschlüsselnden Datum ein fester Speicherplatz und somit eine fest zugeordnete Adresse zugeordnet ist, und dass das verschlüsselte, gespeicherte Datum genau an dieser fest zugeordneten Adresse gespeichert ist und bleibt, bis es wieder anhand dieser Adresse ausgelesen wird. Aus einem vorhandenen geheimen Generalschlüssel bzw. Masterschlüssel und der Adressinformation für eine Speicherposition bzw. eine individuell adressierbare Einheit kann nun ein individueller Schlüssel generiert werden, mit welchem dann das betreffende Datum bei einem Schreibvorgang verschlüsselt und bei einem Lesevorgang entschlüsselt werden kann.

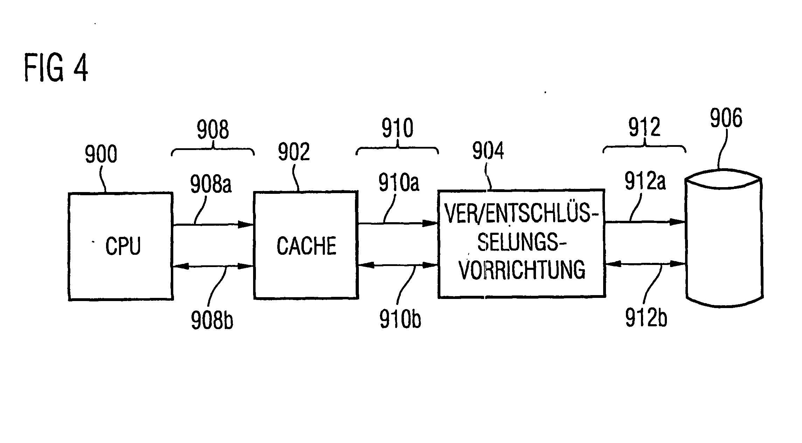

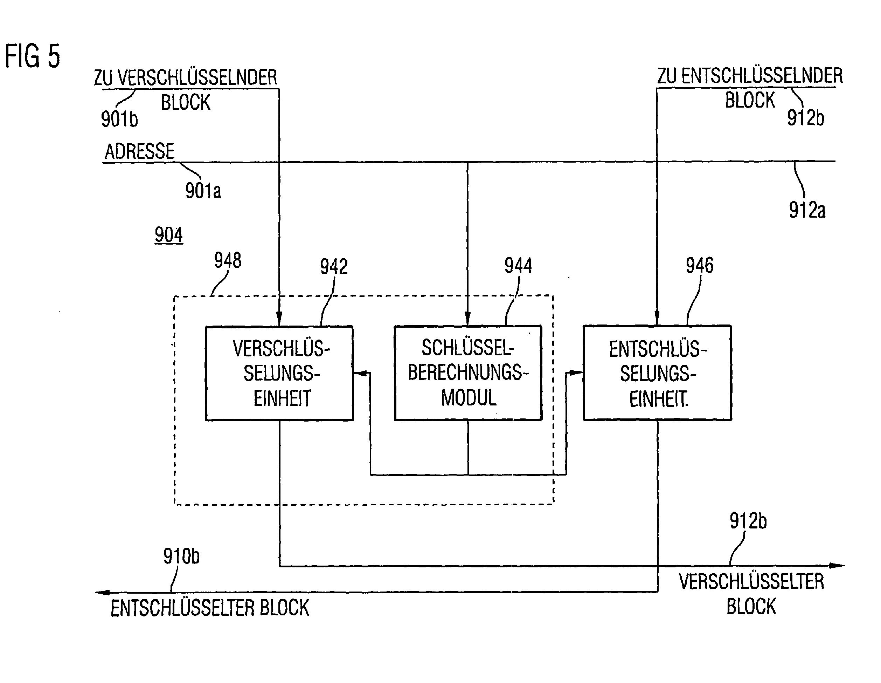

Anhand der Fig. 4 und 5 wird ein bisher möglicher Aufbau von Systemen mit adressabhängiger Verschlüsselung, wie sie bisher implementiert sein konnte, beschrieben. Fig. 4 zeigt den groben Aufbau einer Anordnung mit Speicherverschlüsselung. Die Anordnung umfasst eine CPU 900, einen Cache-Speicher 902, eine Ver/Entschlüsselungsvorrichtung 904 und einen Speicher 906. CPU 900 und Cache 902 sind über einen Bus 908 miteinander verbunden. Der Bus 908 umfasst einen Adressbus 908a und einen Datenbus 908b. Ebenso sind der Cache 902 und die Ver/Entschlüsselungsvorrichtung 904 über einen Bus 910 miteinander verbunden, der seinerseits wiederum aus einem Adressbus 910a und einem Datenbus 910b besteht, während die Ver/Entschlüsselungsvorrichtung 904 und der Speicher 906 über einen Bus 912 miteinander verbunden sind, der aus einem Adressbus 912a und einem Datenbus 912b besteht.

In einem Schreibzugriff sendet nun die CPU 900 zunächst die Adresse, an der ein zu speicherndes Datum gespeichert werden soll, über den Adressbus 908a zu dem Cache-Speicher 902. Von dort aus gelangt die Adresse über den Adressbus 910a weiter zur Ver/Entschlüsselungsvorrichtung 904, die aus der Adresse wiederum den adressindividuellen Schlüssel erzeugt. Auf dem Datenbus 908b gibt die CPU 900 das zu speichernde Datum unverschlüsselt an den Cache-Speicher 902 aus. Der Cache-Speicher 902 trägt das Paar von Adresse und zu speichernden Daten unter Verdrängung eines anderen Adress/Datum-Paars ein und leitet das zu speichernde Datum an die Ver/Entschlüsselungsvorrichtung 904 weiter. Diese verschlüsselt das zu speichernde Datum gemäß dem adressindividuellen Schlüssel und gibt das Chiffrat über den Datenbus 912b an den Speicher 906 zur physikalischen Speicherung aus.

Beim Lesevorgang gibt die CPU 900 über den Adressbus 908a die Adresse an den Cache-Speicher 902 aus. Dieser schlägt zunächst nach, ob der aktuelle Speicherinhalt dieser Adresse in dem Cache-Speicher vorhanden ist. In dem Fall eines Cache-Fehlschlags, gelangt die Adresse über den Adressbus 910a weiter an die Ver/Entschlüsselungsvorrichtung 904. Diese erzeugt wiederum aus der Adresse den adressindividuellen Schlüssel und gibt ersteren über die Adressleitung 912a an den Speicher 906 aus. Der Speicher 906 gibt den Speicherinhalt dieser Adresse an die Ver/Entschlüsselungsvorrichtung 904 als Antwort zurück, die ihrerseits wiederum anhand des adressindividuellen Schlüssels das von dem Speicher 906 ausgelesene Chiffrat in Klartext-Daten umwandelt und über den Datenbus 910b an den Cache-Speicher 902 ausgibt. Der Cache-Speicher 902 aktualisiert daraufhin seine Einträge durch Verdrängung eines anderen Adress/Datum-Paars und gibt das entschlüsselte Klartext-Datum über den Datenbus 908b an die CPU 900 aus.

Fig. 5 stellt die Ver/Entschlüsselungsvorrichtung 904 von Fig. 4 detaillierter dar. Wie es zu sehen ist, umfasst die Ver/Entschlüsselungsvorrichtung 904 eine Verschlüsselungseinheit 942, ein Schlüsselberechnungsmodul 944 und eine Entschlüsselungseinheit 946. Die Verschlüsselungseinheit 942 ist vorgesehen, um die zu speichernden Blöcke bei Speichervorgängen zu empfangen und verschlüsselte Blöcke über den Datenbus 912b auszugeben. Auf ähnliche Weise ist die Entschlüsselungseinheit 946 vorgesehen, um zu entschlüsselnde Blöcke über den Datenbus 912b von dem Speicher zu empfangen und über den Datenbus 910b als entschlüsselte Blöcke in Richtung CPU bzw. Cache weiterzuleiten. Das Schlüsselberechnungsmodul 944 ist mit den Adressbussen 910a und 912a verbunden, die, wie es in Fig. 5 zu sehen ist, einen einheitlichen Adressbus bilden. Schlüsselberechnungsmodul 944 ist sowohl bei Schreib- als auch bei Lesevorgängen vorgesehen, um die Adresse auf dem Adressbus 910a bzw. 912a in den adressindividuellen Schlüssel umzuwandeln und denselben an einen Schlüsseleingang der Verschlüsselungseinheit 942 bzw. der Entschlüsselungseinheit 946 auszugeben, die ihrerseits wiederum diesen Schlüssel zur Ver- bzw. Entschlüsselung verwenden.

Mit der gestrichelten Linie ist in Fig. 5 noch einmal der Verschlüsselungsteil 948 der Ver/Entschlüsselungsvorrichtung 904 hervorgehoben. Wie es zu sehen ist, umfasst derselbe die Verschlüsselungseinheit 942 und das Schlüsselberechnungsmodul 944. Jede ist für eine spezielle Aufgabe bei der Verschlüsselung zuständig, nämlich die Verschlüsselungseinheit 942 für die Verschlüsselung des zu speichernden Datenblocks und das Schlüsselberechnungsmodul 944 für die Generierung des adressindividuellen Schlüssels. Verschlüsselungseinheit 942 und Schlüsselberechnungsmodul 944 bestehen jeweils aus einer eigenen Hardware, die zudem zur Hardware der Entschlüsselungseinheit 946 verschieden ist. Adresse und zu speichernder Block durchlaufen folglich in dem Verschlüsselungsteil 948 physikalisch unterschiedliche Datenpfade, um aus ihnen den adressindividuellen Schlüssel bzw. den verschlüsselten Datenblock zu erhalten. Bei isolierter Betrachtungsweise des Entschlüsselungsteils ergibt sich natürlich ähnliches.

Nachteilhaft an der Realisierungsmöglichkeit nach Fig. 5 ist, dass zur Speichersicherung ein enormer Aufwand an Hardware notwendig ist. Es wäre deshalb wünschenswert, ein Ver/Entschlüsselungsschema zur gesicherten Speicherung von Daten zu haben, das weniger hardwareintensiv in seiner Realisierung bzw. Implementierung ist. Insbesondere bei Chipkarten und Smartcards nämlich zahlt sich jegliche Einsparung an Chipfläche in besonders hohem Maße aus, da diese Artikel Massenartikel sind. Die US6345359 B1 offenbart eine in-linie-Entschlüsselung zum Schutz eingebetteter Software, bestehend in der Generierung adressabhängiger Schlüssel zur Entschlüsselung.

Die US 2002/0073326 A1 bezieht sich auf den Schutz gespeicherter Daten unter Verwendung der Speicheradresse als einen Verschlüsselungsschlüssel. Als Verschlüsselungsschlüssel können die physikalische Adresse, die logische Adresse oder jegliche andere Adresse verwendet werden, die in kausaler und vorhersagbarer Art und Weise von einer der beiden Adressen abhängt.

Die EP 0 455 064 B1 grenzt sich gegenüber Speichersystemen, bei denen die gespeicherten Daten unter Verwendung der Speicheradresse geschützt werden, ab und unternimmt einen Schutz der gespeicherten Daten dadurch, dass basierend auf der Datenadresse eines zu speichernden oder gespeicherten Datums zunächst eine Schlüsseladresse bereit gestellt wird, die dann auf ein Datum zeigt, dass als ein Verschlüsselungsschlüssel zur Verschlüsselung des zu speichernden bzw. gespeicherten Datums dient. Gemäß einem speziellen Ausführungsbeispiel wird beschrieben, dass die Bereitstellung der Schlüsseladresse durch Null-Setzen von Bits der Datenadresse erfolgt, woraufhin die Schlüsseladresse verwendet wird, um ein Verschlüsselungsschlüsselbit zu erzeugen, dass dann bitweise mit dem Byte, das in dem Datenregister gespeichert ist, einer XNOR-Verknüpfung unterzogen wird.

Die Aufgabe der vorliegenden Erfindung besteht demnach darin, ein Ver/Entschlüsselungsschema für Speicherzugriffe zu schaffen, so dass die Implementierung effektiver ist.

Diese Aufgabe wird durch eine Vorrichtung gemäß Anspruch 1 oder 2 und ein Verfahren gemäß Anspruch 8 oder 9 gelöst.

Die Erkenntnis der vorliegenden Erfindung besteht darin, dass entweder der Verschlüsselungsteil oder der Entschlüsselungsteil einer Ver/Entschlüsselungsvorrichtung oder ein den beiden Teilen gemeinsamer Teil sowohl zur Ver- bzw. Entschlüsselung des zu speichernden Datums bzw. des verschlüsselten Speicherinhalts als auch zur Generierung des adressindividuellen Schlüssels bzw. adressabhängigen Schlüssels verwendet werden kann, wodurch der Implementierungsaufwand im Hinblick auf die Chipfläche verringert wird, ohne dass dabei bei den meisten Bussystemen die Latenzzeit für Speicherzugriffe wesentlich erhöht würde.

So kann beispielsweise der Verschlüsselungsteil einer Ver/Entschlüsselungsvorrichtung in einer Adressphase eines zwischen Chiffre-Domain, d.h. Speicher-Seite, und KlartextDomain, d.h. CPU- bzw. Cache-Seite, verlaufenden Busses dazu verwendet werden, aus der Adresse des Speicherzugriffs den adressabhängigen Schlüssel zu erzeugen, indem die Adresse mit einem Masterschlüssel verschlüsselt wird. In der auf dem Bus auf die Adressphase folgenden Schreib- bzw. Lese-Phase des Busses kann dieselbe Hardware, d.h. die Verschlüsselungseinheit, dann zur eigentlichen Verschlüsselung der zu speichernden Daten herangezogen werden, wobei als Schlüssel der in der Adressphase generierte adressabhängige Schlüssel verwendet wird.

Bevorzugte Ausführungsbeispiele der vorliegenden Erfindung werden nachfolgend Bezug nehmend auf die beiliegenden Zeichnungen näher erläutert. Es zeigen:
- Fig. 1: ein Schaltbild einer Ver/Entschlüsselungsvorrich- tung gemäß einem Ausführungsbeispiel der vorliegen- den Erfindung;
- Fig. 2: ein Schaltbild einer Ver/Entschlüsselungsvorrich- tung gemäß einem weiteren Ausführungsbeispiel der vorliegenden Erfindung;
- Fig. 3: ein Flussdiagramm zur Veranschaulichung der Verar- beitungsschritte in der Vorrichtung nach Fig. 2;
- Fig. 4: eine Anordnung aus CPU und Speicher als Beispiel für ein Speichersystem mit verschlüsselter Speiche- rung; und
- Fig. 5: ein Schaltbild einer herkömmlichen Möglichkeit zur adressabhängigen Verschlüsselung von Speicherinhal- ten.

Bevor Bezug nehmend auf die Figuren nachfolgend spezielle Ausführungsbeispiele für die vorliegende Erfindung beschrieben werden, wird darauf hingewiesen, dass identische oder ähnliche Elemente in den Figuren dort mit identischen oder ähnlichen Bezugszeichen versehen sind, und dass eine wiederholte Beschreibung dieser Elemente weggelassen wird.

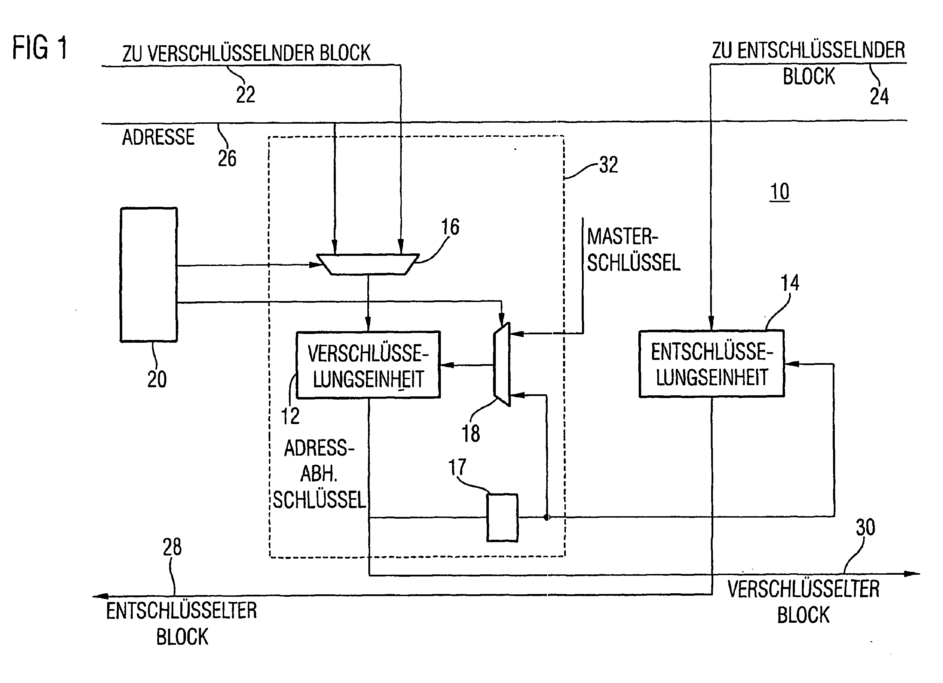

Fig. 1 zeigt ein Ausführungsbeispiel einer Ver/Entschlüsselungsvorrichtung mit einem Verschlüsselungsteil, bei dem ein einziges kryptographisches Rechenwerk sowohl zur Generierung des adressabhängigen Schlüssels als auch zur Verschlüsselung zu verschlüsselnder Daten herangezogen wird.

Die Ver/Entschlüsselungsvorrichtung von Fig. 1, die allgemein mit 10 angezeigt ist, kann beispielsweise bei dem Speichersystem von Fig. 12 als Ver/Entschlüsselungsvorrichtung 904 verwendet werden. Sie umfasst ein kryptographisches Rechenwerk 12 als Verschlüsselungseinheit, ein kryptographisches Rechenwerk 14 als Entschlüsselungseinheit, einen Dateneingangmultiplexer 16, ein Schlüsselregister 17, einen Schlüsseleingangmultiplexer 18 und eine Steuereinrichtung 20. Die gesamte Ver/Entschlüsselungsvorrichtung umfasst drei Eingänge und zwei Ausgänge, insbesondere nämlich einen Eingang 22 zum Empfang zu speichernder Blöcke, einen Eingang 24 zum Empfang zu entschlüsselnder Blöcke, einen Eingang 26 zum Empfang einer Zugriffsadresse, einen Ausgang 28 zur Ausgabe entschlüsselter Blöcke und einen Ausgang 30 zur Ausgabe verschlüsselter Datenblöcke. Ein erster Dateneingang des Multiplexers 16 ist mit dem Eingang 26 verbunden, um die Zugriffsadresse zu erhalten, während ein zweiter Dateneingang des Multiplexers 16 mit dem Eingang 22 verbunden ist, um zu speichernde Datenblöcke zu erhalten. Ein Datenausgang des Multiplexers 16 ist mit einem Dateneingang der Verschlüsselungseinheit 12 verbunden. An einem ersten Dateneingang des Multiplexers 18 liegt ein Masterschlüssel bzw. Generalschlüssel an, der beispielsweise fest in einem zugehörigen Speicher (nicht gezeigt) gespeichert ist. Ein zweiter Dateneingang des Multiplexers 18 ist mit einem Registerausgang des Registers 17 verbunden, dessen Registereingang wiederum mit einem Datenausgang der Verschlüsselungseinheit 12 verbunden ist. Ein Datenausgang des Multiplexers 18 ist mit einem Schlüsseleingang der Verschlüsselungseinheit 12 verbunden. Beide Multiplexer 16 und 18 weisen Steuereingänge auf, die wiederum mit Steuerausgängen der Steuereinheit 20 verbunden sind. Der Datenausgang der Verschlüsselungseinheit 12 ist gleichzeitig mit dem Datenausgang 30 der Ver/Entschlüsselungsvorrichtung 10 verbunden. Auf Entschlüsselungsseite ist die Entschlüsselungseinheit 14 mit Dateneingang und Datenausgang zwischen Eingang 24 und Ausgang 28 geschaltet. Ein Schlüsseleingang der Entschlüsselungseinheit 14 ist ebenfalls mit dem Registerausgang des Schlüsselregisters 17 verbunden. Dateneingang 22 und Adresseingang 26 sind mit einem Bus verbunden, auf dem Adressphasen Schreibphasen vorausgehen, und in Adressphasen zunächst die Zugriffsadresse und in der Schreibphase dann der zu speichernde Block übertragen wird. Dementsprechend sind Dateneingang 24 und Adresseingang 26 ebenfalls mit einem Bus verbunden, auf dem Adressphasen Lesephasen vorausgehen, und in Adressphasen zunächst die Zugriffsadresse und in der Lesephase dann der zu lesende Chiffrat-Block übertragen wird. Beide Busse können als ein Bus betrachtet werden, dessen Datenbusteil durch die Ver/Entschlüsselungsvorrichtung 10 als Schnittstelle zwischen Chiffre- und Klartextdomain unterbrochen wird und an den Datenausgängen 28 und 30 weiterläuft.

Nachdem nun im vorhergehenden der Aufbau der Vorrichtung von Fig. 1 beschrieben wurde, wird im folgenden deren Funktionsweise beschrieben. Zunächst sei ein Speichervorgang betrachtet. Bei einem Speichervorgang soll die Ver/Entschlüsselungsvorrichtung 10 einen zu speichernden Datenblock, der am Eingang 22 in Klartext vorliegt und beispielsweise über einen Bus von einer CPU stammt, zu einem verschlüsselten Block verschlüsseln und dann am Datenausgang 30 zur physikalischen Speicherung im Chiffre-Format ausgeben. Damit nun das Speicherziel für den zu speichernden Block am Dateneingang 22 auch empfangsseitig bekannt ist, wird auf dem Bus ferner die Zugriffsadresse, die auf den gewünschten Speicherort verweist, übertragen und gelangt zum Adresseingang 26. Das Paar von Adresse und zu speicherndem Block wird bei einem Lesevorgang aber zeitlich versetzt auf den Bus übertragen. Insbesondere wird zunächst in einer Adressphase des Busses die Zugriffsadresse für den Speicherzugriff übertragen. Hierauf folgt in einer Schreibphase die Übertragung des zu speichernden Blocks, der somit später eintrifft. Folglich treffen von einem Adress/Daten-Paar bei einem Schreibzugriff die Zugriffsadresse früher an dem Adresseingang 26 ein als die zu speichernden und zu verschlüsselnden Daten am Dateneingang 22.

Wenn nun die Zugriffsadresse am Adresseingang 26 eintrifft, steuert die Steuereinheit 20 in Kenntnis dessen, dass ein Schreibzugriff vorliegt, den Multiplexer 16 in dieser Adressphase derart an, dass er den mit dem Adresseingang 26 verbundenen Dateneingang auf den Multiplexerausgang schaltet bzw. mit dem Dateneingang der Verschlüsselungseinheit 12 verbindet. Den Multiplexer 18 steuert die Steuereinheit während der Adressphase derart an, dass dieser den Masterschlüssel an den Schlüsseleingang der Verschlüsselungseinheit 12 weiterleitet. Die Steuerung der Multiplexer 16 und 18 bewirkt die Steuereinheit über Steuersignale an die Steuereingänge der Multiplexer 16 und 18. Die Steuerung der Multiplexer 16 und 18 auf die beschriebene Weise bewirkt, dass die Speicheradresse in der Adressphase einen Datenpfad durchläuft, der von dem Adresseingang 26 über den Multiplexer 16, die Verschlüsselungseinheit 12 bis hin zum Schlüsselregister 17 führt, um dann für eine Weiterleitung über den Multiplexer 18 an den Schlüsseleingang der Verschlüsselungseinheit 12 bereitzustehen, wie es im folgenden beschrieben wird. Während die Adresse hierbei die Verschlüsselungseinheit 12 durchläuft, liegt an dem Schlüsseleingang der Verschlüsselungseinheit 12 der Masterschlüssel an. Im Enddefekt bedeutet dies, dass die Zugriffsadresse in der Adressphase des mit den Eingängen 22 und 26 verbundenen Busses (nicht gezeigt) mit dem Masterschlüssel verschlüsselt wird.

Die Verschlüsselungseinheit 12 ist beispielsweise ein DES-Modul oder ein anderes Block-Chiffre-Modul. Die Adresse 26 kann der Verschlüsselungseinheit 12 in modifizierter Form zugeleitet werden, falls die Verschlüsselungseinheit 12 eine Datenblockabbildung ist, die Datenblöcke mit einer größeren Bitlänge erwartet als die Bitlänge der Adresse an dem Adresseingang 26. In diesem Fall kann die Adresse 26 beispielsweise mit Nullen oder Einsen als LSBs (least siginificant bit = niedrigstwertiges Bit) oder MSBs (most siginificant bit = niedrigstwertiges Bit) ergänzt werden, oder die Adresse wird zweifach zugeführt, um einen Eingangsblock an der Verschlüsselungseinheit 12 mit einer doppelten Anzahl an Bits zu erzielen. Die Verschlüsselungseinheit 12 generiert aus der Adresse in der Adressphase deshalb einen adressabhängigen Schlüssel, der am Ende des Datenpfades in der Adressphase im Register 17 zwischengespeichert wird, um im nachfolgenden Buszyklus, da das zu verschlüsselnde Datum auf dem Bus eintrifft, vom Registerausgang aus am zweiten Dateneingang des Multiplexers 18 anzuliegen.

In der auf die Adressphase folgenden Schreibphase liegt an dem zweiten Dateneingang des Multiplexers 16 der zu speichernde Block an. Die Steuereinheit 20 steuert in dieser Phase den Multiplexer 16 derart an, dass er den zu speichernden Block an den Dateneingang der Verschlüsselungseinheit 12 weiterleitet, und den Multiplexer 18 derart, dass dieser nun nicht den Masterschlüssel sondern den in der Adressphase generierten und im Register 17 bereitstehenden adressabhängigen Schlüssel an den Schlüsseleingang der Verschlüsselungseinheit 12 weiterleitet. In der Schreibphase schlägt folglich der zu speichernde Block einen Datenpfad ein, der über den Multiplexer 16 und die Verschlüsselungseinheit 12 zum Ausgang 30 führt, wobei während des Durchlaufens des zu speichernden Blocks durch die Verschlüsselungseinheit 12 der in der Adressphase generierte adressabhängige Schlüssel am Schlüsseleingang der Verschlüsselungseinheit 12 anliegt. Hierdurch wird der zu speichernde Block durch die Verschlüsselungseinheit 12 in der Schreibphase mit dem adressabhängigen Schlüssel verschlüsselt, wodurch sich am Ausgang 30 der verschlüsselte Block ergibt.

Aus der vorhergehenden Beschreibung wird deutlich, dass sowohl die Adresse als auch der zu speichernde Block in dem Verschlüsselungsteil der Ver/Entschlüsselungsvorrichtung 10, der in Fig. 1 mit einer gestrichelten Linie 32 angezeigt ist, Datenpfade einschlagen, die beide durch die Verschlüsselungseinheit 12 führen. Sowohl für die Schlüsselgenerierung als auch für die eigentliche Verschlüsselung wird folglich die gleiche Hardware, nämlich das Rechenwerk für die Verschlüsselungseinheit 12, verwendet. Eine extra vorgesehene Recheneinheit zur Berechnung des adressabhängigen Schlüssels ist nicht vorgesehen bzw. nicht notwendig. Der zeitliche Zusatzaufwand durch die serielle Verwendung der Verschlüsselungseinheit 12 zu sowohl der Schlüsselgenerierung als auch zur eigentlichen Verschlüsselung hält sich in Grenzen, da Adresse und zu speichernden Block ohnehin zeitlich versetzt in Adressierungsphase bzw. darauffolgender Schreibphase eintreffen.

Bei einem Entschlüsselungsvorgang verhält sich die Ver/Entschlüsselungsvorrichtung 10 etwas anders. In diesem Fall steuert die Steuereinheit 20 den Multiplexer 16 und den Multiplexer 18 genauso an wie in der Adressphase während eines Schreibvorganges, d.h. Leiten der Adresse zum Dateneingang der Verschlüsselungseinheit 12 und des Masterschlüssels zum Schlüsseleingang derselben. Die in der Adressphase zuerst eintreffende Adresse wird demnach zunächst von der Verschlüsselungseinheit 12 verschlüsselt, um den adressabhängigen Schlüssel zu erhalten, woraufhin der spätere in der Lesephase eintreffende zu entschlüsselnde Block an der Entschlüsselungseinheit unter Verwendung des im Register 17 bereitstehenden adressabhängigen Schlüssels entschlüsselt wird, um am Ausgang 28 den entschlüsselten Block auszugeben.

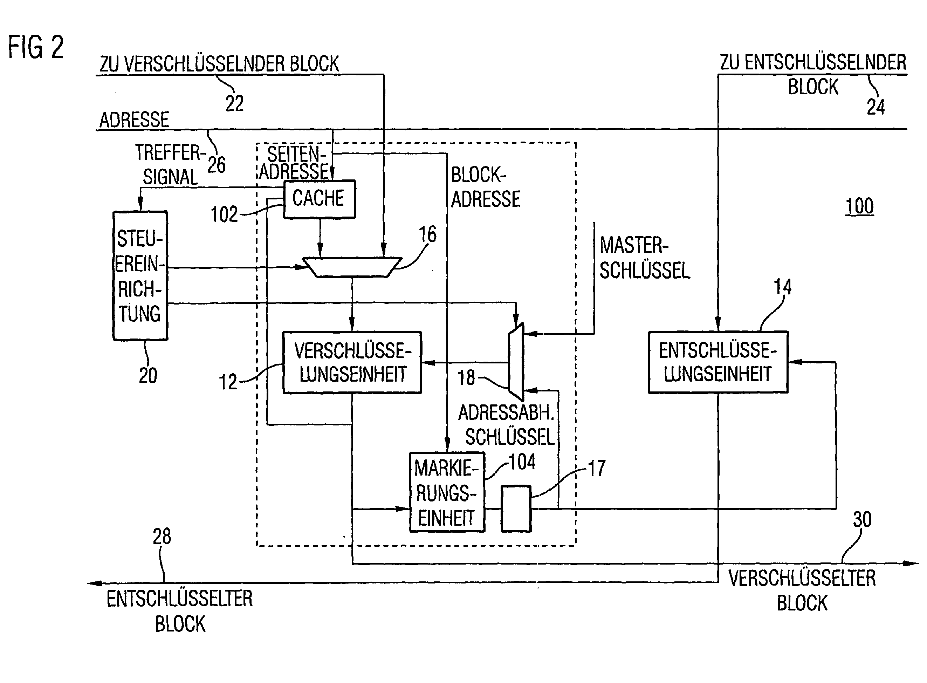

Das Ausführungsbeispiel von Fig. 1 zeigte deutlich den Nutzen, Verschlüsselungseinheit 12 zu sowohl Schlüsselgenerierung als auch eigentlicher Verschlüsselung zu verwenden. Schlüsselgenerierung werden hier bei jedem Speicher- und Lesevorgang durchgeführt. Schlüsselgenerierungsphase und Ver- bzw. Entschlüsselungsphase sind bei der Vorrichtung von Fig. 1 folglich in etwa gleich lang. Fig. 2 zeigt ein Ausführungsbeispiel für eine Ver/Entschlüsselungsvorrichtung, bei der dieser Aufwand in zweierlei Hinsicht verringert wird. Zunächst wird nicht die vollständige Adresse des zu speichernden Blocks, d.h. die eindeutige Adresse, zur Schlüsselgenerierung durch die Verschlüsselungseinheit herangezogen. Vielmehr wird die Adresse in eine Seitenadresse und eine Blockadresse gegliedert und die adressabhängigen Schlüssel nur seitenweise vergeben und aus den Seitenadressen erzeugt. Die Blockadresse wird verwendet, um die Blöcke einer Seite mit unterschiedlichen adressabhängigen Schlüsseln verschlüsseln zu können, wobei sich diese jedoch lediglich durch eine verhältnismäßig einfach zu implementierende Maskierung eines zugrundeliegenden Seitenschlüssels voneinander unterscheiden.

Ferner wird überhaupt versucht die komplizierte Schlüsselgenerierung durch die Verschlüsselungseinheit so oft es geht zu vermeiden, indem ein Cache-Speicher verwendet wird, um einen oder mehre aktuelle Seitenschlüssel für einen schnellen Zugriff bereit zu halten.

Die Ver/Entschlüsslungsvorrichtung von Fig. 2, die allgemein mit 100 angezeigt ist, umfasst neben den Einheiten der Vorrichtung von Fig. 1 einen Seitenschlüssel-Cache-Speicher 102 und eine Maskierungseinheit 104. Der Cache-Speicher 102 umfasst einen Dateneingang, einen Datenweiterleitungsausgang, einen Trefferdatenausgang und einen Treffersignalausgang. Der Dateneingang des Cache-Speichers 102 ist mit dem Adresseingang 26 verbunden, um den Seitenadressteil der eindeutigen Adresse am Adresseingang 26 zu erhalten. Dies sind vorliegend exemplarisch die 16 MSB (most significant bits = höchstwertige Bits) einer eindeutigen 18-Bit-Adresse am Adresseingang 26. Der Datenweiterleitungsausgang des Cache-Speichers 102 ist mit dem Multiplexer 16 verbunden. Er ist vorgesehen, um die Seitenadresse am Dateneingang in dem Fall eines Cache-Fehlschlags weiterzuleiten. Der Trefferdatenausgang ist wie der Datenausgang der Verschlüsselungseinheit 12 mit einem Dateneingang der Maskierungseinheit 104 verbunden ebenso wie mit dem Datenausgang 30. Der Treffersignalausgang des Cache-Speichers ist mit einem Signaleingang der Steuereinrichtung 20 verbunden. Ein weiterer Dateneingang der Maskierungseinheit 104 ist mit dem Adresseingang 26 verbunden, um an derselben die Blockadresse der eindeutigen Adresse am Adresseingang 26 zu empfangen, d.h. in Anlehnung an vorliegendes exemplarisches Beispiel die zwei LSB (least significant bits = niedrigstwertige Bits) der eindeutigen 18-Bit-Adresse. Ein Datenausgang der Maskierungseinheit 104 ist mit dem Registereingang des Schlüsselregisters 17 verbunden. Die restlichen Anschlüsse der Einheiten sind zu denen von Fig. 1 identisch.

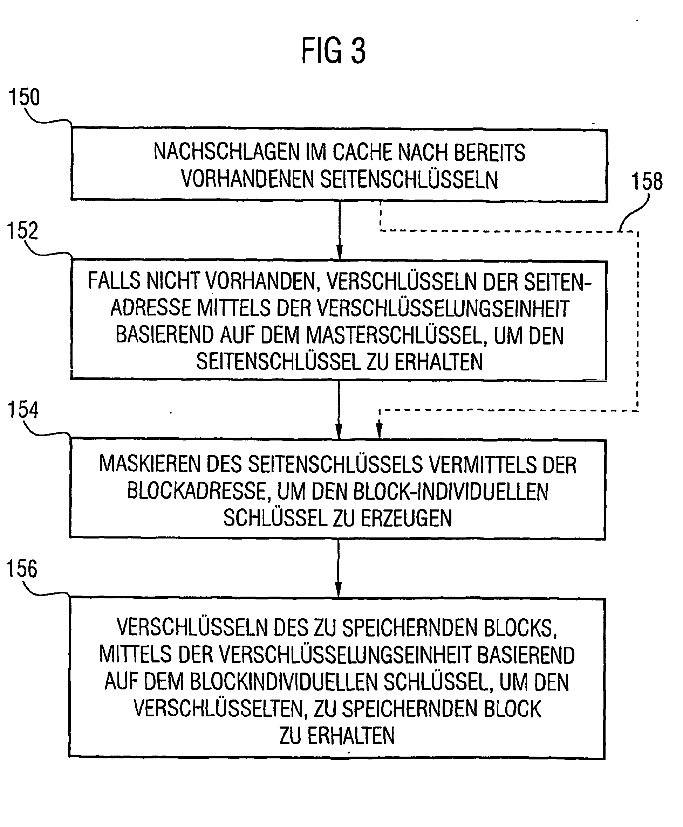

Die Funktionsweise der Vorrichtung 100 von Fig. 2 wird Bezug nehmend auf Fig. 3 beschrieben, wobei angenommen wird, dass das zu speichernde Datum (k₀, k₁, k₂, ... k₃₁) und die zugehörige Speicheradresse (a₀, a₁, a₂, ... a₁₇) ist, mit k₃₁ und a₁₇ jeweils als dem LSB, k₀ und a₀ jeweils als dem MSB und kᵢ und aⱼ ∈ {0,1} und i=0...31 und j=0...17.

Wie bereits erwähnt, liegt zunächst in einer Adressphase die Speicheradresse am Eingang 26 an. Aus dieser Speicheradresse gelangt der Seitenadressteil bestehend aus den 16 MSBs, d.h. (a₀, a₁, a₂, ..., a₁₅) zu dem Cache-Speicher 102. In einem Schritt 150 wird nun im Cache-Speicher 102 nachgeschlagen, ob sich darin für die gesuchte Seitenadresse ein seitenindividueller Schlüssel befindet. Der Cache-Speicher 102 umfasst eine Liste von Paaren von Seitenadresse und zugehörigem Seitenadress-abhängigen Schlüssel. In dem Fall eines Cache-Fehlschlags leitet der Cache-Speicher 102 die Seitenadresse an den ersten Dateneingang des Multiplexers 16 weiter. Die Steuereinrichtung 20 steuert ansprechend hierauf in einem Schritt 152 die Multiplexer 16 und 18 in der Adressphase des mit den Eingängen 26 und 22 verbundenen Busses wie in dem Fall von Fig. 1 an, d.h. derart, dass der Multiplexer 16 den Datenweiterleitungsausgang des Cache 102 mit dem Dateneingang der Verschlüsselungseinheit 12 verbindet, und dass der Multiplexer 18 den Masterschlüssel an den Schlüsseleingang der Verschlüsselungseinheit 12 anlegt. In dem Schritt 152 wird folglich in dem Fall eines Cache-Fehlschlags die weitergeleitete Seitenadresse mittels der Verschlüsselungseinheit 12 basierend auf dem Masterschlüssel verschlüsselt, wodurch ein Seitenschlüssel erhalten wird. Der frisch berechnete Seitenschlüssel wird zur Aktualisierung freilich auch in den Cache-Speicher 102 eingetragen, der eine geeignete Verdrängungsstrategie aufweist, wie z.B. das FIFO-, bei dem das zuerst hineingekommene (First-In-First-Out) Seitenadress/Seitenschlüssel-Paar verdrängt wird, oder das LRU- (Least Recently Used) Prinzip, bei dem das am wenigsten neulich verwendete bzw. dasjenige, auf das am wenigsten neulich zugegriffen wurde, verdrängt wird. Anstelle eines Cache-Speichers kann auch ein einfaches Register verwendet werden, das nur den zuletzt berechneten Seitenschlüssel für eine Seitenadresse enthält.

Die Verschlüsselungseinheit 12 implementiert eine nichtlineare Abbildung eines 32-Bit-Blockes auf einen 32-Bit-Block. Da die Seitenbitadresse jedoch lediglich 16 Bit lang ist, wird diese vor der Eingabe in die Verschlüsselungseinheit 12 gespreizt, wie z.B. durch Zuführen von (a₀, a₁, a₂, ..., a₁₅, 0, 0, ...., 0), (a₀, a₁, a₁, a₁, ..., ..., a₁₄, a₁₄, a₁₅, a₁₅) oder (a₀, a₁, a₂, ..., a₁₅, a₀, a₁, a₂, ..., a₁₅) zum Dateneingang der Verschlüsselungseinheit 12. Der sich in Schritt 152 ergebende berechnete Seitenschlüssel ist 32 Bit lang und sei gegeben durch (s₀, s₁, s₂, ..., s₃₁).

Der am Eingang der Maskierungseinheit 104 anliegende Seitenschlüssel wird in einem Schritt 154 mit der Blockadresse, d.h. den zwei LSBs der Speicheradresse bzw. (a₁₆, a₁₇) durch einfache Bitverknüpfung bzw. bitweise Verknüpfung zwischen den Bits der Blockadresse und den Bits des Seitenschlüssels maskiert, wie z.B. durch Abbilden des Seitenschlüssels auf (s₀ ⊕ a₁₆, s₁ ⊕ a₁₇, s₂ ⊕ a₁₆, s₃ ⊕ a₁₇, ..., s₃₁ ⊕ a₁₇), was dann den am Ausgang der Maskierungseinheit 104 ausgegebenen adressabhängigen Schlüssel darstellt, der zunächst im Schlüsselregister 17 zwischengespeichert wird, um bei Eintreffen des zu verschlüsselnden Blocks im nächsten Buszyklus am zweiten Dateneingang des Multiplexers 18 anzuliegen.

Wenn nun in der später folgenden Schreibphase des Busses das zu speichernde Datum am Eingang 22 anliegt, steuert die Steuereinrichtung 20 die Multiplexer 16 und 18 wie in dem Beispiel von Fig. 1 an, d.h. derart, dass der Multiplexer 16 das zu speichernde Datum an den Dateneingang und der Multiplexer 18 den adressabhängigen Schlüssel an den Schlüsseleingang der Verschlüsselungseinheit 12 weiterleitet. Hierdurch wird in einem Schritt 156 das zu speichernde Datum mittels des in der Adressphase berechneten adressabhängigen Schlüssels verschlüsselt, wodurch das verschlüsselte Datum erhalten wird und am Ausgang 30 ausgegeben wird.

Bezug nehmend auf die vorhergehende Funktionsbeschreibung im Rahmen eines Schreibzugriffs wird auf folgendes hingewiesen. Bei der Beschreibung von Fig. 3 war von einem Paar von 18-Bit-Adresse und 32-Bit-Datum die Rede. Es ist jedoch ferner möglich, dass in der Schreibphase mehr als nur ein zu speicherndes 32-Bit-Datum verschlüsselt wird. Die 18-Bit-Adresse definiert beispielsweise einen Speicherbereich eindeutig, der vier 32-Bit-Dateneinheiten umfasst. Diese vier Einheiten könnten dann in der Schreibphase nacheinander mit demselben adressabhängigen Schlüssel verschlüsselt werden, indem sie in der Schreibphase durch die Verschlüsselungseinheit 12 geschleust werden.

Ein Vorteil, der durch die Aufspaltung der 18-Bit-Adresse in einen 16-Bit-Seitenadressteil und einen 2-Bit-Blockadressteil erzielt worden ist, besteht darin, dass die vier Datenblöcke, die zu einer Seite gehören, die durch die Seitenadresse eindeutig identifiziert wird, alle auf der Basis desselben Seitenschlüssels verschlüsselt werden - ein Vorgang der relativ zeitaufwendig ist. Trotzdem werden die vier Blöcke einer Seite nicht mit demselben Schlüssel verschlüsselt. Denn für jeden Block wird ja der Seitenschlüssel durch die Maskierungseinheit 104 mit der blockindividuellen Blockadresse maskiert. Dieser Vorgang ist jedoch vergleichsweise einfach und unaufwendig. Wenn nun innerhalb einer Seite beispielsweise nacheinander Blöcke einer Seite geschrieben werden, dann befindet sich in Schritt 150 bei den auf den ersten Schreibvorgang folgenden Schreibvorgängen in dem Cache-Speicher 102 für die Seitenadresse, die ja für alle Blöcke einer Seite identisch ist, ein bereits berechneter Seitenschlüssel in dem Cache-Speicher 102. In diesem Fall kann deshalb die Verschlüsselung der Seitenadresse durch die Verschlüsselungseinheit 12 umgangen werden, was der Cache-Speicher 102 durch Ausgeben des bereits berechneten, gespeicherten Seitenschlüssels über den Trefferdatenausgang an den Dateneingang der Maskierungseinheit 104 verwirklicht. Der aufwendige Verschlüsselungsschritt von Schritt 152 kann damit übersprungen werden, was durch eine gestrichelte Linie in Fig. 3, angezeigt durch 158, angedeutet ist. Durch ein Treffersignal zeigt der Cache-Speicher 102 der Steuereinrichtung 20 an, dass ein Cache-Treffer aufgetreten ist, welche Information die Steuereinrichtung 20 dazu verwenden kann, um in der Schreibphase die Verschlüsselung des ankommenden zu speichernden Datums frühestmöglich zu beginnen oder andere Steueränderungen vorzunehmen. Folglich verringern sich durch das Vorsehen des Cache-Speichers 102 die Latenzzeiten bei Speicherzugriffen. Die Maskierung durch die Blockadresse verhindert die Verwendung desselben adressabhängigen Schlüssels für alle Blöcke einer Seite bei gleichzeitig geringem Zusatzaufwand.

Bei Lesevorgängen agiert die Vorrichtung 100 von Fig. 2 - ähnlich wie auch die Vorrichtung von Fig. 1 - analog zur Funktionsweise bei Schreibvorgängen, nämlich mit dem Unterschied, dass die Verarbeitung der Daten in der Lesephase an der Entschlüsselungseinheit und nicht an der Verschlüsselungseinheit durchführt. Ansonsten sind die Schritte 150-158 entsprechend auch auf den Lesevorgang anwendbar, wobei jedoch, wie es ebenfalls auf Fig. 1 zutrifft, bei Lesevorgängen die Steuereinrichtung den Multiplexer 16 und 18 konstant sowohl in Adress- als auch Lesephase derart ansteuert, dass sie Cacheweiterleitungsausgang mit Dateneingang und Masterschlüssel an Schlüsseleingang der Verschlüsselungseinheit 12 weiterleiten bzw. anlegen.

Die im vorhergehenden beschrieben Ausführungsbeispiele lösen das Problem des in der Beschreibungseinleitung beschriebenen höheren Hardwareaufwands bei adressabhängiger Schlüsselgenerierung durch ein zweistufiges Konzept, das angepasst ist an die Besonderheiten des Bus-Timings. In der Adressierungsphase des Busses wird das Hardware-Modul 10 bzw. 100 zur Generierung des Verschlüsselungsschlüssels genutzt. Bevor das zu verschlüsselnde oder zu entschlüsselnde Wort zur Verfügung steht, wird aus der Speicher-Adresse des Wortes und aus einem geheimen Universal-Schlüssel bzw. Masterschlüssel ein Bereichsschlüssel generiert, der dann in der Folge zur Verschlüsselung (bzw. Entschlüsselung) des Wortes verwendet wird. Dieser Bereichsschlüssel ist also der Verschlüsselungsschlüssel. Wenn das Wort präsent ist, wird es von demselben Hardware-Modul unter Anwendung des Bereichsschlüssels verschlüsselt bzw. entschlüsselt. Die Verwendung derselben Hardware zur Bereichsschlüsselgenerierung und zur Ver/Entschlüsselung reduziert den Flächenbedarf des Moduls beträchtlich (in etwa Halbierung der Fläche). Die wortserielle blockweise Ver- oder Entschlüsselung der Speicherinhalte mit dem im ersten Schritt ermittelten Bereichsschlüssel erfolgt direkt während der Schreib- bzw. Lesephase des Busses "on the fly". Die vorigen Ausführungsbeispiele lassen sich zwanglos in Standardbussysteme integrieren.

Die vorigen Ausführungsbeispiele hatten gemeinsam, dass ein und dasselbe Stück Hardware derselben, nämlich bei den Ausführungsbeispielen von Fig. 1 und 2 die Verschlüsselungseinheit, gleichzeitig zur Generierung des Verschlüsselungsschlüssels und zur Verschlüsselung benutzt wurde. Freilich wäre es auch möglich dasselbe Stück Hardware gleichzeitig zur Generierung des Verschlüsselungsschlüssels und zur Entschlüsselung zu verwenden. Der unsymmetrische Aufbau, nämlich die Heranziehung entweder des Ver- oder des Entschlüsselungsteils zur Generierung des adressabhängigen Schlüssels oder eines Teils derselben, kann auch aufgehoben werden. Die Ver/Entschlüsselungsvorrichtung kann ein kryptographisches Modul zum Erzeugen des adressabhängigen Schlüssels aus der Zugriffsadresse und zum Verschlüsseln des zu speichernden Datums oder Entschlüsseln des Speicherinhaltes mit dem adressabhängigen Schlüssel umfassen, wobei zumindest ein kryptographisches Rechenwerk bzw. eine Hardware des kryptographischen Moduls für beide Aufgaben verwendet wird, d.h. für sowohl Ver- und Entschlüsselung auf der einen und Schlüsselgenerierung auf der anderen Seite.

Insbesondere wird darauf hingewiesen, dass abhängig von den Gegebenheiten das erfindungsgemäße Schema zur Ver/Entschlüsselung auch in Software implementiert sein kann. Die Implementation kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computer-programm mit einem Programmcode zur Durchführung des Verfahrens realisiert werden, wenn das Computerprogramm auf einem Computer abläuft.

## Patentansprüche

1. Vorrichtung zur Verschlüsselung eines zu speichernden Datums bei einem Schreibzugriff auf einen Speicher an einer Zugriffsadresse in ein verschlüsseltes Datum, mit
einem kryptographischen Modul (10; 100) zum Erzeugen eines adressabhängigen Schlüssels aus der Zugriffsadresse und zum Verschlüsseln des zu speichernden Datums mit dem adressabhängigen Schlüssel, wobei das kryptographische Modul (10; 100) ein kryptographisches Rechenwerk (12) mit einem Dateneingang, einem Schlüsseleingang und einem Datenausgang zum Durchführen eines kryptographischen Algorithmus an Daten am Dateneingang und Schlüsseleingang, um am Datenausgang ein kryptographisches Ergebnis auszugeben, aufweist; und
einer Steuereinrichtung (20) zum Steuern des kryptographischen Moduls (10; 100) derart, dass in einer ersten Phase die Zugriffsadresse einen ersten Datenpfad durch das kryptographische Modul (10; 100) durchläuft, in den das kryptographische Rechenwerk (12) mit Dateneingang und Datenausgang geschaltet ist, und in der ersten Phase bei Durchlaufen der Zugriffsadresse durch das kryptographische Rechenwerk (12) ein Masterschlüssel am Schlüsseleingang des kryptographischen Rechenwerkes (12) anliegt, um am Ende der ersten Phase den adressabhängigen Schlüssel zu erhalten, und in einer zweiten Phase das zu speichernde Datum einen zweiten Datenpfad durchläuft, in den das kryptographische Rechenwerk (12) mit Dateneingang und Datenausgang geschaltet ist, und in der zweiten Phase bei Durchlaufen des zu speichernden Datums durch das kryptographische Rechenwerk (12) der adressabhängige Schlüssel am Schlüsseleingang des kryptographischen Rechenwerkes (12) anliegt, so dass am Ende der zweiten Phase das zu speichernde Datum erhalten wird.

2. Vorrichtung zur Entschlüsselung eines Speicherinhalts bei einem Lesezugriff auf einen Speicher an einer Zugriffsadresse in ein entschlüsseltes Datum, mit
einem kryptographischen Modul zum Erzeugen eines adressabhängigen Schlüssels aus der Zugriffsadresse und zum Entschlüsseln des Speicherinhalts mit dem adressabhängigen Schlüssel, wobei das kryptographische Modul ein kryptographisches Rechenwerk mit einem Dateneingang, einem Schlüsseleingang und einem Datenausgang zum Durchführen eines kryptographischen Algorithmus an Daten am Dateneingang und Schlüsseleingang, um am Datenausgang ein kryptographisches Ergebnis auszugeben, aufweist; und
einer Steuereinrichtung zum Steuern des kryptographischen Moduls derart, dass in einer ersten Phase die Zugriffsadresse einen ersten Datenpfad durch das kryptographische Modul durchläuft, in den das kryptographische Rechenwerk mit Dateneingang und Datenausgang geschaltet ist, und in der ersten Phase bei Durchlaufen der Zugriffsadresse durch das kryptographische Rechenwerk ein Masterschlüssel am Schlüsseleingang des kryptographischen Rechenwerkes anliegt, um am Ende der ersten Phase den adressabhängigen Schlüssel zu erhalten, und in einer zweiten Phase der Speicherinhalt einen zweiten Pfad durchläuft, in den das kryptographische Rechenwerk mit Dateneingang und Datenausgang geschaltet ist, und in der zweiten Phase bei Durchlaufen des Speicherinhalts durch das kryptographische Rechenwerk der adressabhängige Schlüssel am Schlüsseleingang des kryptographischen Rechenwerkes anliegt, so dass am Ende der zweiten Phase das entschlüsselte Datum erhalten wird.

3. Vorrichtung gemäß Anspruch 1 oder 2, wobei die Vorrichtung mit einem Daten/Adressbus gekoppelt ist, um von demselben die Zugriffsadresse und das zu speichernde Datum bzw. den Speicherinhalt zu erhalten, wobei der Adressbus gestaltet ist, um die Zugriffsadresse und das zu speichernde Datum bzw. den Speicherinhalt zeitlich versetzt und in dieser Reihenfolge zu übertragen.

4. Vorrichtung gemäß einem der vorhergehenden Ansprüche, die ferner folgendes Merkmal aufweist:
einen Multiplexer (18) mit einem ersten und einem zweiten Multiplexerdateneingang und einem ersten Multiplexerdatenausgang, wobei der erste Multiplexerdatenausgang mit dem Schlüsseleingang des kryptographischen Rechenwerkes (12) verbunden ist, der erste Multiplexerdateneingang ein Ende des ersten Datenpfades bildet und an dem zweiten Multiplexerdateneingang der Masterschlüssel anliegt.

5. Vorrichtung gemäß einem der Ansprüche 1 bis 4, die ferner folgendes Merkmal aufweist:
einen Speicher (102) zum Speichern des adressabhängigen Schlüssels oder eines Zwischenergebnissen beim Durchlaufen der Zugriffsadresse durch das kryptographische Modul (100),
wobei die Steuereinrichtung (20) ausgebildet ist, um bei einem nächsten Zugriff mit einer nächsten Zugriffsadresse in dem Fall, dass die nächste Zugriffsadresse zu der Zugriffsadresse identisch ist, bei der Verschlüsselung bzw. der Entschlüsselung während dieses Zugriffs die erste Phase zu überspringen oder in der ersten Phase das kryptographische Modul (100) derart zu steuern, dass das Zwischenergebnis einen Rest des ersten Datenpfades durchläuft, um den adressabhängigen Schlüssel zu erhalten.

6. Vorrichtung gemäß einem der Ansprüche 1 bis 5, bei der die Zugriffsadresse eine Seitenadresse ist, die eindeutig eine Speicherseite des Speichers bestimmt, in der das zu speichernde Datum bzw. der Speicherinhalt liegt, wobei die Speicherseite in Speicherblöcke gegliedert ist und jeder der Speicherblöcke wiederum in Speicherworte, wobei das zu speichernde Datum bzw. der Speicherinhalt ein Speicherwort ist, und wobei das Speicherwort eindeutig durch eine eindeutige Adresse bestimmt ist, die sich aus der Seitenadresse, einer Blockadresse, die zusammen mit der Seitenadresse den Block eindeutig bestimmt, dem das Speicherwort angehört, und einer Wortadresse zusammensetzt.

7. Vorrichtung gemäß Anspruch 6, die ferner folgendes Merkmal aufweist:
eine Maskierungseinrichtung (104) mit einem ersten Maskierungsdateneingang, einem zweiten Maskierungsdateneingang und einem Maskierungsdatenausgang zum bitweisen logischen Verknüpfen jedes Bits am ersten Markierungsdateneingang mit einem jeweiligen Bit am zweiten Maskierungsdateneingang, um am Maskierungsdatenausgang ein Maskierungsergebnis zu erhalten,
wobei die Steuereinrichtung (20) ausgebildet ist, um in der ersten Phase das kryptographische Modul (100) derart zu steuern, dass die Maskierungseinrichtung (104) mit dem ersten Maskierungsdateneingang und dem Maskierungsdatenausgang in den ersten Datenpfad geschaltet ist und beim Durchlaufen der Seitenadresse durch die Maskierungseinrichtung (104) an dem zweiten Maskierungsdateneingang die Blockadresse anliegt.

8. Verfahren zur Verschlüsselung eines zu speichernden Datums bei einem Schreibzugriff auf einen Speicher an einer Zugriffsadresse in ein verschlüsseltes Datum, mittels eines kryptographischen Moduls (10; 100) zum Erzeugen eines adressabhängigen Schlüssels aus der Zugriffsadresse und zum Verschlüsseln des zu speichernden Datums mit dem adressabhängigen Schlüssel, wobei das kryptographische Modul (10; 100) ein kryptographisches Rechenwerk (12) mit einem Dateneingang, einem Schlüsseleingang und einem Datenausgang zum Durchführen eines kryptographischen Algorithmus an Daten am Dateneingang und Schlüsseleingang, um am Datenausgang ein kryptographisches Ergebnis auszugeben, aufweist, wobei das Verfahren folgende Schritte aufweist:
Steuern des kryptographischen Moduls (10; 100) derart, dass in einer ersten Phase die Zugriffsadresse einen ersten Datenpfad durch das kryptographische Modul (10; 100) durchläuft, in den das kryptographische Rechenwerk (12) mit Dateneingang und Datenausgang geschaltet ist, und in der ersten Phase bei Durchlaufen der Zugriffsadresse durch das kryptographische Rechenwerk (12) ein Masterschlüssel am Schlüsseleingang des kryptographischen Rechenwerkes (12) anliegt, um am Ende der ersten Phase den adressabhängigen Schlüssel zu erhalten; und
Steuern des kryptographischen Moduls (10; 100) derart, dass in einer zweiten Phase das zu speichernde Datum einen zweiten Datenpfad durchläuft, in den das kryptographische Rechenwerk (12) mit Dateneingang und Datenausgang geschaltet ist, und in der zweiten Phase bei Durchlaufen des zu speichernden Datums durch das kryptographische Rechenwerk (12) der adressabhängige Schlüssel am Schlüsseleingang des kryptographischen Rechenwerkes (12) anliegt, so dass am Ende der zweiten Phase das zu speichernde Datum erhalten wird.

9. Verfahren zur Entschlüsselung eines Speicherinhalts bei einem Lesezugriff auf einen Speicher an einer Zugriffsadresse in ein entschlüsseltes Datum, mittels eines kryptographischen Moduls zum Erzeugen eines adressabhängigen Schlüssels aus der Zugriffsadresse und zum Entschlüsseln des Speicherinhalts mit dem adressabhängigen Schlüssel, wobei das kryptographische Modul ein kryptographisches Rechenwerk mit einem Dateneingang, einem Schlüsseleingang und einem Datenausgang zum Durchführen eines kryptographischen Algorithmus an Daten am Dateneingang und Schlüsseleingang, um am Datenausgang ein kryptographisches Ergebnis auszugeben, aufweist, wobei das Verfahren folgende Schritte aufweist:
Steuern des kryptographischen Moduls derart, dass in einer ersten Phase die Zugriffsadresse einen ersten Datenpfad durch das kryptographische Modul durchläuft, in den das kryptographische Rechenwerk mit Dateneingang und Datenausgang geschaltet ist, und in der ersten Phase bei Durchlaufen der Zugriffsadresse durch das kryptographische Rechenwerk ein Masterschlüssel am Schlüsseleingang des kryptographischen Rechenwerkes anliegt, um am Ende der ersten Phase den adressabhängigen Schlüssel zu erhalten; und
Steuern des kryptographischen Moduls derart, dass in einer zweiten Phase der Speicherinhalt einen zweiten Pfad durchläuft, in den das kryptographische Rechenwerk mit Dateneingang und Datenausgang geschaltet ist, und in der zweiten Phase bei Durchlaufen des Speicherinhalts durch das kryptographische Rechenwerk der adressabhängige Schlüssel am Schlüsseleingang des kryptographischen Rechenwerkes anliegt, so dass am Ende der zweiten Phase das entschlüsselte Datum erhalten wird.

10. Computer-Programm mit einem Programmcode zur Durchführung des Verfahrens nach Anspruch 8 oder 9, wenn das Computer-Programm auf einem Computer abläuft.

## Claims

1. Apparatus for encrypting a datum to be stored during a write access to a memory at an access address into an encrypted datum, having
a cryptographic module (10; 100) for generating an address-dependent key from the access address and for encrypting the datum to be stored with the address-dependent key, wherein the cryptographic module (10; 100) comprises a cryptographic calculating unit (12) with a data input, a key input, and a data output for performing a cryptographic algorithm on data at the data input and key input, to output a cryptographic result at the data output; and
a control means (20) for controlling the cryptographic module (10; 100), such that in a first phase the access address passes through the cryptographic module (10; 100) in a first data path into which the cryptographic calculating unit (12) is connected with data input and data output, and a master key is present at the key input of the cryptographic calculating unit (12) in the first phase when the access address passes through the cryptographic calculating unit (12), in order to obtain the address-dependent key at the end of the first phase, and in the second phase the datum to be stored passes through a second data path into which the cryptographic calculating unit (12) is connected with data input and data output, and the address-dependent key is present at the key input of the cryptographic calculating unit (12) in the second phase when the datum to be stored passes through the cryptographic calculating unit (12), so that the datum to be stored is obtained at the end of the second phase.

2. Apparatus for decrypting a memory content during a read access to a memory at an access address into a decrypted datum, having
a cryptographic module for generating an address-dependent key from the access address and for decrypting the memory content with the address-dependent key, wherein the cryptographic module comprises a cryptographic calculating unit with a data input, a key input, and a data output for performing a cryptographic algorithm on data at the data input and key input, to output a cryptographic result at the data output; and
a control means for controlling the cryptographic module, such that in a first phase the access address passes through the cryptographic module in a first data path into which the cryptographic calculating unit is connected with data input and data output, and a master key is present at the key input of the cryptographic calculating unit in the first phase when the access address passes through the cryptographic calculating unit, in order to obtain the address-dependent key at the end of the first phase, and in the second phase the memory content passes through a second path into which the cryptographic calculating unit is connected with data input and data output, and the address-dependent key is present at the key input of the cryptographic calculating unit in the second phase when the memory content passes through the cryptographic calculating unit, so that the decrypted datum is obtained at the end of the second phase.

3. Apparatus of claim 1 or 2, wherein the apparatus is coupled to a data/address bus so as to obtain the access address and the datum to be stored and the memory content therefrom, respectively, wherein the address bus is designed to transmit the access address and the datum to be stored and the memory content, respectively, in temporally offset manner and in this order.

4. Apparatus of one of the preceding claims, further comprising:
a multiplexer (18) with a first and a second multiplexer data input and a first multiplexer data output, wherein the first multiplexer data output is connected to the key input of the cryptographic calculating unit (12), the first multiplexer data input forms an end of the first data path, and the master key is present at the second multiplexer data input.

5. Apparatus of one of claims 1 to 4, further comprising:
a memory (102) for storing the address-dependent key or an intermediate result when the access address passes through the cryptographic module (100),
wherein the control means (20) is formed to skip, during a next access with a next access address, in case the next access address is identical with the access address, the first phase in the encryption or the decryption during this access or to control the cryptographic module (100) in the first phase, such that the intermediate result passes through a rest of the fist data path, to obtain the address-dependent key.

6. Apparatus of one of claims 1 to 5, wherein the access-address is a page address uniquely determining a memory page of the memory in which the datum to be stored or the memory content is located, wherein the memory page is divided into memory blocks, and each of the memory blocks again into memory words, wherein the datum to be stored or the memory content is a memory word, and wherein the memory word is uniquely determined by a unique address consisting of the page address, a block address uniquely determining, together with the page address, the block to which the memory word belongs, and a word address.

7. Apparatus of claim 6, further comprising:
a masking means (104) with a first masking data input, a second masking data input, and a masking data output for bit-wise logically linking each bit at the first masking data input with a respective bit at the second masking data input, to obtain a masking result at the masking data output,
wherein the control means (20) is formed to control the cryptographic module (100) in the first phase, such that the masking means (104) is connected into the first data path with the first masking data input and the masking data output and the block address is present at the second masking data input when the page address passes through the masking means (104).

8. Method of encrypting a datum to be stored during a write access to a memory at a memory address into an encrypted datum by means of a cryptographic module (10; 100) for generating an address-dependent key from the access address and for encrypting the datum to be stored with the address-dependent key, wherein the cryptographic module (10; 100) comprises a cryptographic calculating unit (12) with a data input, a key input, and a data output for performing a cryptographic algorithm on data at the data input and key input, to output a cryptographic result at the data output, wherein the method comprises the steps of:
controlling the cryptographic module (10; 100), such that in a first phase the access address passes through the cryptographic module (10; 100) in a first data path into which the cryptographic calculating unit (12) is connected with data input and data output, and a master key is present at the key input of the cryptographic calculating unit (12) in the first phase when the access address passes through the cryptographic calculating unit (12), in order to obtain the address-dependent key at the end of the first phase; and
controlling the cryptographic module (10; 100), such that in a second phase the datum to be stored passes through a second data path into which the cryptographic calculating unit (12) is connected with data input and data output, and the address-dependent key is present at the key input of the cryptographic calculating unit (12) in the second phase when the datum to be stored passes through the cryptographic calculating unit (12), so that the datum to be stored is obtained at the end of the second phase.

9. Method of decrypting a memory content during a read access to a memory at an access address into a decrypted datum by means of a cryptographic module for generating an address-dependent key from the access address and for decrypting the memory content with the address-dependent key, wherein the cryptographic module comprises a data input, a key input, and a data output for performing a cryptographic algorithm on data at the data input and key input, to output a cryptographic result at the data output, wherein the method comprises the steps of:
controlling the cryptographic module, such that in a first phase the access address passes through the cryptographic module in a first data path into which the cryptographic calculating unit is connected with data input and data output, and a master key is present at the key input of the cryptographic calculating unit in the first phase when the access address passes through the cryptographic calculating unit, in order to obtain the address-dependent key at the end of the first phase; and
controlling the cryptographic module, such that in a second phase the memory content passes through a second path into which the cryptographic calculating unit is connected with data input and data output, and the address-dependent key is present at the key input of the cryptographic calculating unit in the second phase when the memory content passes through the cryptographic calculating unit, so that the decrypted datum is obtained at the end of the second phase.

10. Computer program with program code for performing the method of claim 8 or 9, when the computer program is executed on a computer.

## Revendications

1. Dispositif pour le cryptage d'une donnée à mémoriser; lors d'un accès en écriture à une mémoire à une adresse d'accès, en une donnée cryptée, avec
un module cryptographique (10; 100) destiné à générer une clef fonction de l'adresse à partir de l'adresse d'accès et à crypter la donnée à mémoriser par la clef fonction de l'adresse, le module cryptographique (10; 100) présentant une unité de calcul cryptographique (12) avec une entrée de données, une entrée de clef et une sortie de données pour exécuter un algorithme cryptographique sur des données à l'entrée de données et l'entrée de clef, pour sortir à la sortie de données un résultat cryptographique; et
un moyen de commande (20) destiné à commander le module cryptographique (10; 100) de sorte que, dans une première phase, l'adresse d'accès parcoure un premier trajet de données à travers le module cryptographique (10; 100) auquel est connectée l'unité de calcul cryptographique (12) par une entrée de données et une sortie de données et que, dans la première phase, lors du parcours de l'adresse d'accès par l'unité de calcul cryptographique (12) soit présente une clef principale à l'entrée de clef de l'unité de calcul cryptographique (12), pour obtenir, à la fin de la première phase, la clef fonction de l'adresse et que, dans une deuxième phase, la donnée à mémoriser parcoure un deuxième trajet de données auquel est connectée l'unité de calcul cryptographique (12) par une entrée de données et une sortie de données et que, dans la deuxième phase, lors du parcours de la donnée à mémoriser à travers l'unité de calcul cryptographique (12), soit présente la clef fonction de l'adresse à l'entrée de clef de l'unité de calcul cryptographique (12), de sorte que soit obtenue, à la fin de la deuxième phase, la donnée à mémoriser.

2. Dispositif pour le décryptage d'un contenu de mémoire lors d'un accès en lecture à une mémoire à une adresse d'accès en une donnée décryptée, avec
un module cryptographique destiné à générer une clef fonction de l'adresse à partir de l'adresse d'accès et à décrypter le contenu de mémoire par la clef fonction de l'adresse, le module cryptographique présentant une unité de calcul cryptographique avec une entrée de données, une entrée de clef et une sortie de données pour exécuter un algorithme cryptographique sur des données à l'entrée de données et l'entrée de clef, pour sortir à la sortie de données un résultat cryptographique; et
un moyen de commande destiné à commander le module cryptographique de sorte que, dans une première phase, l'adresse d'accès parcoure un premier trajet de données à travers le module cryptographique auquel est connectée l'unité de calcul cryptographique par une entrée de données et une sortie de données et que, dans la première phase, lors du parcours de l'adresse d'accès par l'unité de calcul cryptographique soit présente une clef principale à l'entrée de clef de l'unité de calcul cryptographique, pour obtenir, à la fin de la première phase, la clef fonction de l'adresse et que, dans une deuxième phase, le contenu de mémoire parcoure un deuxième trajet auquel est connectée l'unité de calcul cryptographique par une entrée de données et une sortie de données et que, dans la deuxième phase, lors du parcours du contenu de mémoire à travers l'unité de calcul cryptographique, soit présente la clef fonction de l'adresse à l'entrée de clef de l'unité de calcul cryptographique, de sorte que soit obtenue, à la fin de la deuxième phase, la donnée décryptée.

3. Dispositif selon la revendication 1 ou 2, le dispositif étant couplé à un bus de données/d'adresse, pour obtenir de ce dernier l'adresse d'accès et la donnée à mémoriser ou le contenu de mémoire, le bus d'adresse étant réalisé de manière à transmettre l'adresse d'accès et la donnée à mémoriser ou le contenu de mémoire décalé dans le temps et dans cet ordre.

4. Dispositif selon l'une des revendications précédentes, présentant, par ailleurs, la caractéristique suivante:
un multiplexeur (18) avec une première et une deuxième entrée de données de multiplexeur et une première sortie de données de multiplexeur, la première sortie de données de multiplexeur étant reliée à l'entrée de clef de l'unité de calcul cryptographique (12), la première entrée de données de multiplexeur constituant une extrémité du premier trajet de données et à la deuxième entrée de données de multiplexeur étant présentante la clef principale.

5. Dispositif selon l'une des revendications 1 à 4, présentant par ailleurs la caractéristique suivante:
une mémoire (102) destinée à mémoriser la clef fonction de l'adresse ou un résultat intermédiaire lors du parcours de l'adresse d'accès à travers le module cryptographique (100),
le moyen de commande (20) étant réalisé de manière à sauter, lors d'un accès suivant par une adresse d'accès suivante, au cas où l'adresse d'accès suivante est identique à l'adresse d'accès, lors du cryptage ou du décryptage pendant cet accès la première phase ou à commander, dans la première phase, le module cryptographique (100) de sorte que le résultat intermédiaire pourcoure un reste du premier trajet de données, pour obtenir la clef fonction de l'adresse.

6. Dispositif selon l'une des revendications 1 à 5, dans lequel l'adresse d'accès est une adresse de page qui détermine de manière univoque une page de la mémoire dans laquelle se trouve la donnée à mémoriser ou le contenu de mémoire, page de mémoire étant divisée en blocs de mémoire et chacun des blocs de mémoire étant, à son tour, divisé en mots de mémoire, la donnée à mémoriser ou le contenu de mémoire étant un mot de mémoire, et le mot de mémoire étant déterminé de manière univoque par une adresse univoque composée de l'adresse de page, d'une adresse de bloc déterminant, ensemble avec l'adresse de page, de manière univoque le bloc auquel appartient le mot de mémoire, et d'une adresse de mot.

7. Dispositif selon la revendication 6, présentant par ailleurs la caractéristique suivante:
un moyen de masquage (104) avec une première entrée de données de masquage, une deuxième entrée de données de masquage et une sortie de données de masquage destinée à coupler de manière logique par bit chaque bit à la première entrée de données de masquage avec un bit respectif à la deuxième entrée de données de masquage, pour obtenir à la sortie de données de masquage un résultat de masquage,
le moyen de commande (20) étant réalisé de manière à commander, dans la première phase, le module cryptographique (100) de sorte que le moyen de masquage (104) soit connecté par la première entrée de données de masquage et la sortie de données de masquage au premier trajet de données et que lors du parcours de l'adresse de page à travers le moyen de masquage (104) soit présente, à la deuxième entrée de données de masquage, l'adresse de bloc.

8. Procédé pour le cryptage d'une donnée à mémoriser, lors d'un accès en écriture à une mémoire à une adresse d'accès, en une donnée cryptée au moyen d'un module cryptographique (10; 100) destiné à générer une clef fonction de l'adresse à partir de l'adresse d'accès et à crypter la donnée à mémoriser par la clef fonction de l'adresse, le module cryptographique (10; 100) présentant une unité de calcul cryptographique (12) avec une entrée de données, une entrée de clef et une sortie de données pour exécuter un algorithme cryptographique sur des données à l'entrée de données et l'entrée de clef, pour sortir à la sortie de données un résultat cryptographique, le procédé présentant les étapes suivantes consistant à:
commander le module cryptographique (10; 100) de sorte que, dans une première phase, l'adresse d'accès parcoure un premier trajet de données à travers le module cryptographique (10; 100) auquel est connectée l'unité de calcul cryptographique (12) par une entrée de données et une sortie de données et que, dans la première phase, lors du parcours de l'adresse d'accès à travers l'unité de calcul cryptographique (12) soit présente une clef principale à l'entrée de clef de l'unité de calcul cryptographique (12), pour obtenir, à la fin de la première phase, la clef fonction de l'adresse; et
commander le module cryptographique (10; 100) de sorte que, dans une deuxième phase, la donnée à mémoriser parcoure un deuxième trajet de données auquel est connectée l'unité de calcul cryptographique (12) par une entrée de données et une sortie de données et que, dans la deuxième phase, lors du parcours de la donnée à mémoriser à travers l'unité de calcul cryptographique (12), soit présente la clef fonction de l'adresse à l'entrée de clef de l'unité de calcul cryptographique (12), de sorte que soit obtenue, à la fin de la deuxième phase, la donnée à mémoriser.

9. Procédé pour le décryptage d'un contenu de mémoire lors d'un accès en lecture à une mémoire à une adresse d'accès en une donnée décryptée au moyen d'un module cryptographique destiné à générer une clef fonction de l'adresse à partir de l'adresse d'accès et à décrypter le contenu de mémoire par la clef fonction de l'adresse, le module cryptographique présentant une unité de calcul cryptographique avec une entrée de données, une entrée de clef et une sortie de données pour exécuter un algorithme cryptographique sur des données à l'entrée de données et l'entrée de clef, pour sortir à la sortie de données un résultat cryptographique; le procédé présentant les étapes suivantes consistant à:
commander le module cryptographique de sorte que, dans une première phase, l'adresse d'accès parcoure un premier trajet de données à travers le module cryptographique auquel est connectée l'unité de calcul cryptographique par une entrée de données et une sortie de données et que, dans la première phase, lors du parcours de l'adresse d'accès à travers l'unité de calcul cryptographique soit présente une clef principale à l'entrée de clef de l'unité de calcul cryptographique, pour obtenir, à la fin de la première phase, la clef fonction de l'adresse; et
commander le module cryptographique de sorte que, dans une deuxième phase, le contenu de mémoire parcoure un deuxième trajet auquel est connectée l'unité de calcul cryptographique par une entrée de données et une sortie de données et que, dans la deuxième phase, lors du parcours du contenu de mémoire à travers l'unité de calcul cryptographique, soit présente la clef fonction de l'adresse à l'entrée de clef de l'unité de calcul cryptographique, de sorte que soit obtenue, à la fin de la deuxième phase, la donnée décryptée.

10. Programme d'ordinateur avec un code de programme pour réaliser le procédé selon la revendication 8 ou 9 lorsque le programme d'ordinateur est exécuté sur un ordinateur.
